# DEMANDE DE BREVET EUROPEEN

(11) **EP 1 235 018 A1**
(43) Date de publication de la demande: **28.08.2002**
(21) Numéro de dépôt: 01420044.8
(22) Date de dépôt: 21.02.2001
(51) Int. Cl.: F16L 13/02

(54) **Tube métallique soudable de l'intérieur pour la réalisation de conduites et conduite réalisée**

(71) Demandeur: SA Hydrotechnique, 03200 Vichy (FR)
(72) Inventeur: Villette, Fabrice, 45700 Pannes (FR)
(74) Mandataire: Perrier, Jean-Pierre

(57) **Abrégé**

Ce tube métallique soudable de l'intérieur pour la réalisation de conduites avec revêtement protecteur extérieur (12), comprend une extrémité en forme de tulipe (4), composé d'une partie terminale (5), dont le diamètre intérieur est supérieur au diamètre extérieur du tube (2), et une partie tronconique de transition (6) entre la partie terminale (5) et le tube (2), et une extrémité mâle (3), chanfreinée vers l'intérieur et dépourvue de revêtement extérieur (12) sur une longueur inférieure à sa longueur de pénétration dans la tulipe.

Selon l'invention, la zone de transition (6) de la tulipe (4) est juxtaposée à une chambre annulaire de protection (7), formée entre elle et une douille métallique extérieure (8), ladite douille étant soudée par l'une de ses extrémités sur la tulipe (4) et par son autre extrémité sur le tube (2) et étant recouverte extérieurement par un revêtement protecteur extérieur (12) allant du tube à l'extrémité libre de la tulipe (4).

## Description

L'invention concerne le domaine des conduites, par exemple des conduites de transport d'eau, formées par soudage bout à bout de tubes comprenant une tulipe à une extrémité, et protégées extérieurement par un revêtement anticorrosion et d'isolation contre les courants parasites.

Il est connu, pour les tubes assemblés par soudure extérieure, soit de protéger la zone de soudure pour éviter que la chaleur dégagée détruise localement le revêtement extérieur, soit de reconstituer le revêtement endommagé par la soudure, par pulvérisation, mise en place d'un manchon thermorétractable ou autre.

Lorsqu'il n'est pas possible d'assurer la liaison des tubes par soudure extérieure, par exemple pour une conduite disposée dans une galerie creusée au plus juste, cette liaison est assurée par une soudure intérieure. La chaleur dégagée par cette soudure entraîne la destruction localisée du revêtement extérieur, qui alors ne peut être reconstitué que si l'espace entre le tube et la galerie le permet, ce qui impose soit de réduire la dimension diamétrale du tube, soit d'augmenter la dimension de la galerie, à défaut de quoi les zones non revêtues peuvent être soumises à la corrosion.

L'objet de l'invention est de fournir un tube métallique remédiant à ces inconvénients et pouvant donc être lié à un autre tube par une soudure intérieure, sans détérioration de son revêtement protecteur extérieur.

L'invention concerne donc un tube comprenant une extrémité en forme de tulipe, composée d'une partie terminale dont le diamètre intérieur est supérieur au diamètre extérieur du tube et d'une partie tronconique de transition entre la partie terminale et le tube, et une extrémité mâle, chanfreinée vers l'intérieur et dépourvue de revêtement extérieur sur une longueur inférieure à sa longueur de pénétration dans la tulipe.

Selon l'invention, la zone de transition de la tulipe est juxtaposée à une chambre annulaire de protection formée entre elle et une douille métallique extérieure, ladite douille étant soudée par l'une de ses extrémités sur la tulipe et par son autre extrémité sur le tube et étant recouverte extérieurement par un revêtement protecteur extérieur allant du tube à l'extrémité de la tulipe.

Lors de la soudure par l'intérieur, de l'extrémité mâle d'un tube abouté contre la zone de transition de la tulipe d'un autre tube, la zone soumise à la plus forte chaleur instantanée est la zone de transition. La chaleur transmise par conduction se répartit en s'atténuant dans la tulipe et dans le corps de deux tubes juxtaposés, celle transmise par rayonnement à partir de la zone de transition est absorbée, en partie par la chambre annulaire contenant de l'air. En outre, la douille métallique diffuse cette chaleur sur toute sa longueur et répartit donc les calories de telle manière que si le revêtement de protection extérieur est ramolli, il n'atteint jamais une température pouvant entraîner sa fusion ou sa destruction.

Cet agencement permet donc d'assurer la soudure bout à bout de tubes métalliques sans destruction du revêtement protecteur extérieur.

L'invention concerne également une conduite métallique formée par soudage bout à bout du tube ci-dessus, conduite comprenant, dans la zone de liaison de deux tubes contigus et entre, respectivement, d'une part la face interne de la tulipe et de sa zone de transition, et d'autre part l'extrémité mâle du tube engagée dans la tulipe, un mastic d'étanchéité mis à refus dans ladite tulipe avant engagement de l'extrémité mâle pour former, après cet engagement, un joint isolant.

L'invention sera mieux comprise à l'aide de la description qui suit en référence au dessin schématique annexé représentant, à titre d'exemple, une forme d'exécution du tube selon l'invention.
Figure 1 est une vue partielle en coupe longitudinale d'un tube selon l'invention,
Figure 2 est une vue similaire à la figure 1 lors de la phase d'emmanchement d'un tube dans la tulipe d'un autre tube,
Figure 3 est une vue partielle en coupe longitudinale d'une conduite obtenue après emmanchement et soudage de deux tubes contigus.

Dans ce dessin, la référence numérique 2 désigne un tube cylindrique métallique du type utilisé pour le transport d'eau ou d'effluents divers. Ce tube est équipé d'une extrémité mâle 3 et d'une extrémité femelle 4 en forme de tulipe, composée d'une partie terminale 5, dont le diamètre intérieur D a une valeur supérieure à celle du diamètre extérieurd du tube 2, et d'une partie tronconique 6, assurant la transition entre la partie 5 et le tube 2.

Selon l'invention, la zone de transition 6 est juxtaposée à une chambre annulaire 7 formée entre elle et une douille métallique extérieure 8 soudée sur la tulipe 4 et sur le tube 2.

Dans la forme d'exécution représentée, la douille est composée d'une partie cylindrique 8a s'emmanchant autour du tube 2 et dont l'extrémité libre est soudée en 9 sur ce tube, d'une partie de transition 8b et d'une partie cylindrique 8c s'emmanchant sur la partie 5 de la tulipe. L'extrémité libre de la partie 8c est soudée en 10 sur la partie 5.

Après soudure de la douille 8 sur le tube 2, celui-ci est, de façon connue, recouvert par un revêtement extérieur de protection 12 qui s'étend sur toute la tulipe 4 et qui s'arrête avant le bout de son extrémité mâle 3 sur une longueur L qui est inférieure à la longueur d'engagement de cette extrémité dans la tulipe 4.

On notera, par ailleurs, que l'extrémité mâle comporte un biseau intérieur 13 facilitant la réalisation de la soudure intérieure.

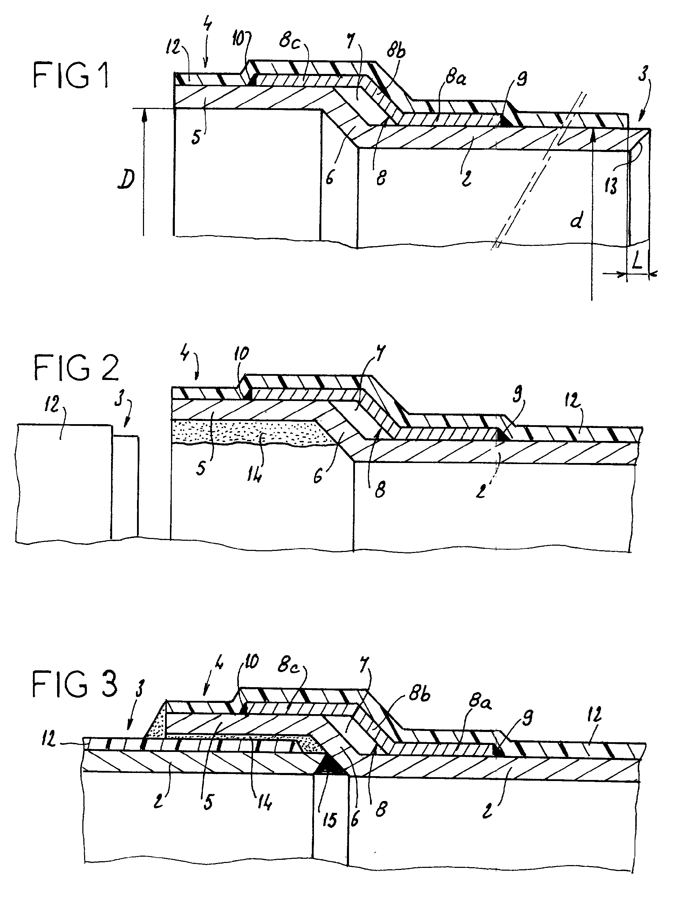

Lorsqu'un tel tube est mis en place dans une galerie pour former une conduite, la tulipe du dernier tube mis en place est garnie intérieurement par une couche de mastic 14, comme montré figure 2, avant engagement de l'extrémité mâle 3 du tube suivant. Après engagement, et comme montré figure 3, le mastic se répartit entre la face interne de la tulipe 4 et l'extrémité mâle 3 en remplissant le jeu fonctionnel entre ces deux parties.

Lorsque la soudure 15 de liaison bout à bout des deux tubes est réalisée, la violente chaleur qui est localisée sur la zone de transition 6 de la tulipe rayonne à partir de la zone de transition dans la chambre annulaire 7 qui, en combinaison avec la douille 8, la répartit et amoindrit ses effets sur le revêtement extérieur 12. Ainsi, celui-ci n'est pas soumis à une destruction localisée et peut, après soudure, continuer à assurer sa fonction protectrice.

Cet agencement simple permet donc de supprimer toute opération de réfection localisée du revêtement extérieur 12, et à diamètre extérieur de tube égal de réaliser des galeries ou des fouilles de dimensions à peine supérieures à celles de ce tube, donc de réduire ainsi les frais de terrassement.

## Revendications

1. Tube métallique soudable de l'intérieur pour la réalisation de conduites avec revêtement protecteur extérieur (12), comprenant une extrémité en forme de tulipe (4), composé d'une partie terminale (5), dont le diamètre intérieur est supérieur au diamètre extérieur du tube (2), et une partie tronconique de transition (6) entre la partie terminale (5) et le tube (2), et une extrémité mâle (3), chanfreinée vers l'intérieur et dépourvue de revêtement extérieur (12) sur une longueur inférieure à sa longueur de pénétration dans la tulipe, **caractérisé en ce que** la zone de transition (6) de la tulipe (4) est juxtaposée à une chambre annulaire de protection (7), formée entre elle et une douille métallique extérieure (8), ladite douille étant soudée par l'une de ses extrémités sur la tulipe (4) et par son autre extrémité sur le tube (2) et étant recouverte extérieurement par un revêtement protecteur extérieur (12) allant du tube à l'extrémité libre de la tulipe (4).

2. Tube métallique selon la revendication 1, **caractérisé en ce que** la douille (8) est composée d'une partie cylindrique (8a) s'emmanchant autour du tube (2) et dont l'extrémité libre est soudée sur ce tube, d'une partie cylindrique (8c) s'emmanchant sur la tulipe (4) et dont l'extrémité libre est soudée sur cette tulipe, et d'une partie tronconique de transition entre les deux parties cylindriques (8a, 8b).

3. Conduite métallique formée par soudage du tube selon l'une quelconque des revendications 1 et 2, **caractérisée en ce qu'**elle comprend, dans la zone de liaison de deux tubes contigus et entre, respectivement, d'une part la face interne de la tulipe (4), et d'autre part l'extrémité mâle (3) du tube (2) engagée dans la tulipe, un mastic d'étanchéité (14) mis à refus dans ladite tulipe avant engagement de l'extrémité mâle (3) pour former, après cet engagement, un joint isolant.
